(19) Europäisches Patentamt
European Patent Office
Office européen des brevets

(11) EP 3 167 002 B1

(12) EUROPEAN PATENT SPECIFICATION

(45) Date of publication and mention of the grant of the patent:
**15.05.2019 Bulletin 2019/20**

(21) Application number: **15734620.6**

(22) Date of filing: **29.06.2015**

(51) Int Cl.:
***C08L 23/12*** *(2006.01)*

(86) International application number:
**PCT/EP2015/064680**

(87) International publication number:
**WO 2016/005218 (14.01.2016 Gazette 2016/02)**

(54) **POLYOLEFIN COMPOSITION**

POLYOLEFINZUSAMMENSETZUNG

COMPOSITION DE POLYOLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.07.2014 EP 14175909**

(43) Date of publication of application:
**17.05.2017 Bulletin 2017/20**

(73) Proprietor: **Basell Poliolefine Italia S.r.l.**
**20121 Milano (IT)**

(72) Inventors:
- **CIARAFONI, Marco**
  **I-44122 Ferrara (IT)**
- **MASSARI, Paola**
  **I-44122 Ferrara (IT)**
- **PANTALEONI, Roberto**
  **I-44122 Ferrara (IT)**

(74) Representative: **Sacco, Marco**
**Basell Poliolefine Italia S.r.l.**
**Intellectual Property**
**P.le Donegani, 12**
**44122 Ferrara (IT)**

(56) References cited:
**EP-A1- 2 592 112**
**WO-A1-2012/049204**
**WO-A1-2012/098086**
**WO-A1-2013/026745**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 167 002 B1

## Description

FIELD OF THE INVENTION

The present disclosure relates to polyolefin compositions comprising an heterophasic propylene/ethylene copolymer and polyethylene especially fit for automotive interior elements in view of particular features such as low oligomer emissions and low gloss values.

BACKGROUND OF THE INVENTION

Polyolefin compositions endowed with good combination of properties can be obtained by properly adding rubbers and polyethylene to the polypropylene.

For example WO 2006/125720 relates to a polypropylene composition comprising (per cent by weight):

a) 65-77% of a crystalline propylene polymer having an amount of isotactic pentads (mmmm), measured by $^{13}$C-MNR on the fraction insoluble in xylene at 25° C, higher than 97.5 molar % and a polydispersity index ranging from 5 to 10;
b) 8 to less than 13% of an elastomeric copolymer of ethylene and propylene, the copolymer having an amount of recurring units deriving from ethylene ranging from 30 to 70%, and being partially soluble in xylene at ambient temperature; the polymer fraction soluble in xylene at ambient temperature having an intrinsic viscosity value ranging from 2 to 4 dl/g; and
c) 10-23% of polyethylene having an intrinsic viscosity value ranging from 1.5 to 4 dl/g and optionally containing recurring units derived from propylene in amounts lower than 10%.

WO 2006/067023 relates to a polypropylene composition comprising (per cent by weight):

a) 50-77% of a crystalline propylene polymer having an amount of isotactic pentads (mmmm), measured by $^{13}$CNMR on the fraction insoluble in xylene at 25°C, higher than 97.5 molar % and a polydispersity index ranging from 4 to 10;
b) 13-28% of an elastomeric copolymer of ethylene and propylene, the copolymer having an amount of recurring units deriving from ethylene ranging from 30 to 70%, and being partially soluble in xylene at ambient temperature, the polymer fraction soluble in xylene at ambient temperature having an intrinsic viscosity value ranging from 2 to 4 dl/g; and
c) 10-22% of polyethylene having an intrinsic viscosity value ranging from 1 to 3 dl/g and optionally containing recurring units deriving from propylene in amounts up to less than 10%.

However these documents do not take into account the optical properties of the resulting composition that can be fine-tuned by balancing the melt flow rate of the various components.

The applicant has now surprisingly found that a polyolefin composition having very low oligomer emissions and good gloss can be obtained

SUMMARY OF THE INVENTION

An object of the present invention is a polyolefin composition comprising:

a) from 40.0 wt% to 58.5 wt%, of a propylene homopolymer having the fraction insoluble in xylene at 25°C higher than 96 wt% and an melt flow rate $MFR^a$ (ISO method 1133 (230° C and 2.16 kg)) ranging from 95.0 to 200.0 g/10 min;
b) from 21.0 wt% to 30.0 wt%%, of a copolymer of ethylene and propylene, the copolymer having an amount of recurring units deriving from ethylene ranging from 35.0 wt% to 60.0 wt%, and the polymer fraction soluble in xylene at 25°C of component a) + component b) having an intrinsic viscosity value ranging from 3.1 to 4.2 dl/g; and ,
c) from 20.5 wt% to 30.0 wt%%, of ethylene homopolymer;

said composition having a value of melt flow rate $MFR^T$ (ISO method 1133 (230° C and 2.16 kg)) ranging from 9.0 to 30.0 g/10 min, and the ratio between the MFR of component a) $MFR^a$ and the MFR of the total composition $MFR^T$ $MFR^a/MFR^T$ is comprised between 5.0 and 15.0.

DETAILED DESCRIPTION OF THE INVENTION

Thus an object of the present invention is a polyolefin composition comprising:

a) from 40.0 wt% to 58.5 wt%, preferably from 45.0 wt% to 58.0 wt%, more preferably from 51.0 wt% to 57.5 wt%, , of a propylene homopolymer having the fraction insoluble in xylene at 25°C higher than 96 wt% preferably higher than 97 wt%; and a melt flow rate $MFR^a$ (ISO method 1133 (230° C and 2.16 kg)) ranging from 95.0 to 200.0 g/10 min; preferably from 100.0 to 180.0 g/10 min; more preferably from 110.0 to 160.0 g/10 min; even more preferably from 130.0 to 160.0 g/10 min;

b) from 21.0 wt% to 30.0 wt%, preferably from 21.5 wt% to 27.5 wt%, more preferably from 21.5 wt% to 24.5 wt%, of a copolymer of ethylene and propylene, the copolymer having an amount of recurring units deriving from ethylene ranging from 35.0 wt% to 60.0 wt%, preferably from 38.0 wt% to 55.0 wt%, more preferably from 41.0 wt% to 49.0 wt% even more preferably from 44.0 wt% to 48.0 wt% and the polymer fraction soluble in xylene at 25°C of component a) + component b) having an intrinsic viscosity value ranging from 3.1 to 4.2 dl/g; and,

c) from 20.5 wt% to 30.0wt%%, preferably from 20.5 wt% to 27.5%, more preferably from 21.0 wt% to 24.5 wt%, of ethylene homopolymer;

said composition having a value of melt flow rate $MFR^T$ (ISO method 1133 (230° C and 2.16 kg)) ranging from 9.0 to 30.0 g/10 min, preferably from 10.0 to 25.0 g/10 min, preferably from 13.0 to 20.0 g/10 min; and the ratio between the MFR of component a) $MFR^a$ and the MFR of the total composition $MFR^T$, $MFR^a/MFR^T$ is comprised between 5.0 and 15.0; preferably between 6.0 and 10.0; more preferably between 6.5 and 9.5.

From the above definitions it is evident that the term "copolymer" includes polymers containing only two kinds of comonomers.

The particular features of the claimed composition and in particular of the MFR ratio gives rise to a polyolefin composition endowed with good mechanical and optical properties, in particular the low value of gloss makes said polyolefin composition particularly fit for the production of automotive interior element.

For automotive interior element it is meant all the interior parts of automotive in particular door handles, door pockets, trim and parcel shelves, air ducts, heater/air conditioning unit casings, armatures for fascia panels, centre consoles, carpeting.

Preferably, the composition of the present invention exhibits a flexural modulus value comprised between 800 and 1400 MPa, preferably between 900 and 1200 MPa.

Preferably the gloss of the composition of the present invention is lower than 22 %; preferably lower than 20% more preferably lower than 19%; even more preferably lower than 17%.

The composition of the present invention is obtained by means of a sequential copolymerization process.

Said process comprising at least three sequential polymerization stages with each subsequent polymerization being conducted in the presence of the polymeric material formed in the immediately preceding polymerization reaction, wherein the polymerization stage of propylene to the crystalline polymer (a) is carried out in at least one stage, then a copolymerization stage of mixtures of ethylene with propylene to copolymer (b) and finally a polymerization stage of ethylene to polyethylene (c) are carried out.

The polymerisation stages may occur in liquid phase, in gas phase or liquid-gas phase. Preferably, the polymerisation of crystalline polymer (a) is carried out in liquid monomer (e.g. using liquid propylene as diluent), while the copolymerisation stages of copolymer (b) and polyethylene (c) are carried out in gas phase. Alternatively, all the three sequential polymerisation stages can be carried out in gas phase.

The reaction temperature in the polymerisation stage for the preparation of crystalline polymer (a) and in the preparation of copolymer (b) and polyethylene (c) be the same or different, and is preferably from 40 to 100° C; more preferably, the reaction temperature ranges from 50 to 80° C in the preparation of polymer (a), and from 70 to 100° C for the preparation of polymer components (b) and (c).

The pressure of the polymerisation stage to prepare polymer (a), if carried out in liquid monomer, is the one which competes with the vapor pressure of the liquid propylene at the operating temperature used, and it may be modified by the vapor pressure of the small quantity of inert diluent used to feed the catalyst mixture, by the overpressure of optional monomers and by the hydrogen used as molecular weight regulator.

The polymerisation pressure preferably ranges from 33 to 43 bar, if done in liquid phase, and from 5 to 30 bar if done in gas phase. The residence times relative to the two stages depend on the desired ratio between polymers (a) and (b) and (c), and can usually range from 15 minutes to 8 hours. Conventional molecular weight regulators known in the art, such as chain transfer agents (e.g. hydrogen or $ZnEt_2$), may be used.

The polymerisation stages may be carried out in the presence of a stereospecific Ziegler-Natta catalyst system.

Said stereospecific Ziegler-Natta catalyst system comprising the product obtained by contacting (a) a solid catalyst component having average particle size ranging from 15 to 80 $\mu$m comprising a magnesium halide, a titanium compound having at least a Ti-halogen bond and at least two electron donor compounds one of which being present in an amount from 50 to 90% by mol with respect to the total amount of donors and selected from succinates and the other being selected from 1,3 diethers, (b) an aluminum hydrocarbyl compound and optionally (c) an external electron donor compound. When the poolefin composition is prepared by using a polymerization process carried out in the presence

of said stereospecific Ziegler-Natta catalyst said polyolefin composition is further endowed with a very low carbon emission.

The presence of these volatile compounds is the responsible of the classic odours of the interior of a new car. Thus it is desirable to reduce the amount of headspace emission according to VDA 277

The values of carbon emission of the polyolefin composition according to the present invention, measured according to VDA 227 (C-emission), are preferably lower than 25.0 μgC/g; preferably they are lower than 20.0 μgC/g; more preferably they are lower than 17.0 μgC/g. The value of the oligomer content of the composition of the present invention measured as reported above are preferably lower than 3000 ppm, more preferably lower than 2500 ppm, even more preferably lower than 2200 ppm.

The features of the polyolefin composition of the present invention renders said polyolefin composition fit for the production of automotive interior element.

Preferably, the succinate present in the solid catalyst component (a) is selected from succinates of formula (I) below :

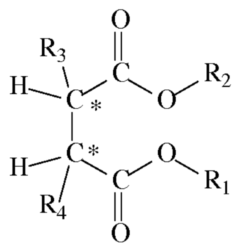

(I)

in which the radicals $R_1$ and $R_2$, equal to, or different from, each other are a $C_1$-$C_{20}$ linear or branched alkyl, alkenyl, cycloalkyl, aryl, arylalkyl or alkylaryl group, optionally containing heteroatoms; and the radicals $R_3$ and $R_4$ equal to, or different from, each other, are $C_1$-$C_{20}$ alkyl, C3-C20 cycloalkyl, C5-C20 aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S)

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

Particularly preferred are the compounds in which the $R_3$ and/or $R_4$ radicals are secondary alkyls like isopropyl, sec-butyl, 2-pentyl, 3-pentyl or cycloakyls like cyclohexyl, cyclopentyl, cyclohexylmethyl.

Examples of the above-mentioned compounds are the (S,R) (S,R) forms pure or in mixture, optionally in racemic form, of diethyl 2,3-bis(trimethylsilyl)succinate, diethyl 2,3-bis(2-ethylbutyl)succinate, diethyl 2,3-dibenzylsuccinate, diethyl 2,3-diisopropylsuccinate, diisobutyl 2,3-diisopropylsuccinate, diethyl 2,3-bis(cyclohexylmethyl)succinate, diethyl 2,3-diisobutylsuccinate, diethyl 2,3-dineopentylsuccinate, diethyl 2,3-dicyclopentylsuccinate, diethyl 2,3-dicyclohexylsuccinate.

Among the 1,3-diethers mentioned above, particularly preferred are the compounds of formula (II)

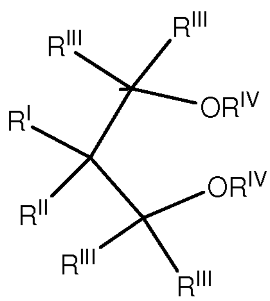

(II)

where $R^I$ and $R^{II}$ are the same or different and are hydrogen or linear or branched $C_1$-$C_{18}$ hydrocarbon groups which can also form one or more cyclic structures; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen; each of $R^I$ to $R^{IV}$ groups can contain heteroatoms selected from halogens, N, O, S and Si.

Preferably, $R^{IV}$ is a 1-6 carbon atom alkyl radical and more particularly a methyl while the $R^{III}$ radicals are preferably hydrogen. Moreover, when $R^{I}$ is methyl, ethyl, propyl, or isopropyl, $R^{II}$ can be ethyl, propyl, isopropyl, butyl, isobutyl, tert-butyl, isopentyl, 2-ethylhexyl, cyclopentyl, cyclohexyl, methylcyclohexyl, phenyl or benzyl; when $R^{I}$ is hydrogen, $R^{II}$ can be ethyl, butyl, sec-butyl, tert-butyl, 2-ethylhexyl, cyclohexylethyl, diphenylmethyl, p-chlorophenyl, 1-naphthyl, 1-decahydronaphthyl; $R^{I}$ and $R^{II}$ can also be the same and can be ethyl, propyl, isopropyl, butyl, isobutyl, tert-butyl, neopentyl, phenyl, benzyl, cyclohexyl, cyclopentyl.

Specific examples of ethers that can be advantageously used include: 2-(2-ethylhexyl) 1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2(1-naphthyl)-1,3-dimethoxypropane, 2(p-fluorophenyl)-1,3-dimethoxypropane, 2(1-decahydronaphthyl)-1,3-dimethoxypropane, 2(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane,2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimetoxypropane, 2,2-di-sec-butyl-1,3-dimetoxypropane, 2,2-di-tert-butyl-1,3-dimethoxypropane, 2,2-dineopentyl-1,3-dimethoxypropane, 2-iso-propyl-2-isopentyl-1,3-dimethoxypropane, 2-phenyl-2-benzyl-1,3-dimetoxypropane, 2-cyclohexyl-2-cyclohexylmethyl-1,3-dimethoxypropane.

Furthermore, particularly preferred are the 1,3-diethers of formula (III)

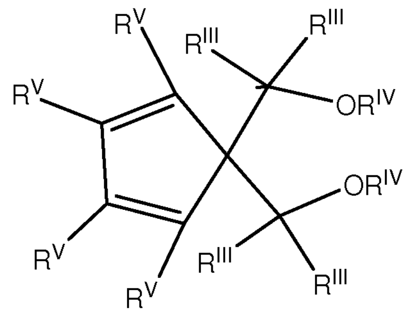

(III)

where the radicals $R^{IV}$ have the same meaning explained above and the radicals $R^{III}$ and $R^{V}$ radicals, equal or different to each other, are selected from the group consisting of hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkaryl and $C_7$-$C_{20}$ aralkyl radicals and two or more of the $R^{V}$ radicals can be bonded to each other to form condensed cyclic structures, saturated or unsaturated, optionally substituted with $R^{VI}$ radicals selected from the group consisting of halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkaryl and $C_7$-$C_{20}$ aralkyl radicals; said radicals $R^{V}$ and $R^{VI}$ optionally containing one or more heteroatoms as substitutes for carbon or hydrogen atoms, or both.

Preferably, in the 1,3-diethers of formulae (I) and (II) all the $R^{III}$ radicals are hydrogen, and all the $R^{IV}$ radicals are methyl. Moreover, are particularly preferred the 1,3-diethers of formula (II) in which two or more of the $R^{V}$ radicals are bonded to each other to form one or more condensed cyclic structures, preferably benzenic, optionally substituted by $R^{VI}$ radicals. Specially preferred are the compounds of formula (IV):

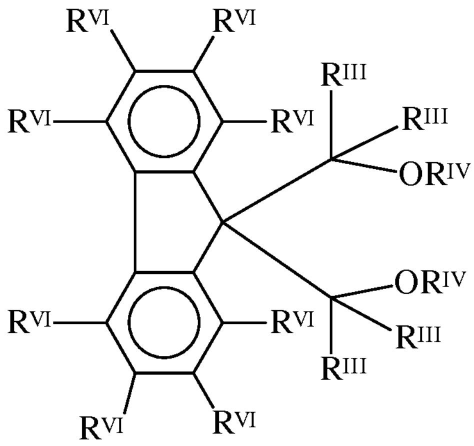

(IV)

where the $R^{VI}$ radicals equal or different are hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkylaryl and $C_7$-$C_{20}$ aralkyl radicals, optionally containing one or more heteroatoms selected from the group consisting of N, 0, S, P, Si and halogens, in particular Cl and F, as substitutes for carbon or hydrogen atoms, or both; the radicals $R^{III}$ and $R^{IV}$ are as defined above for formula (III).

Specific examples of compounds comprised in formulae (III) and (IV) are:

1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)-2,3,4,5-tetrafluorocyclopentadiene;
1,1-bis(methoxymethyl)-3,4-dicyclopentylcyclopentadiene;
1,1--bis(methoxymethyl)indene; 1,1-bis(methoxymethyl)-2,3-dimethylindene;
1,1-bis(methoxymethyl)-4,5,6,7-tetrahydroindene;
1,1-bis(methoxymethyl)-2,3,6,7-tetrafluoroindene;
1,1-bis(methoxymethyl)-4,7-dimethylindene;
1,1-bis(methoxymethyl)-3,6-dimethylindene;
1,1-bis(methoxymethyl)-4-phenylindene;
1,1-bis(methoxymethyl)-4-phenyl-2-methylindene;
1,1-bis(methoxymethyl)-4-cyclohexylindene;
1,1-bis(methoxymethyl)-7-(3,3,3-trifluoropropyl)indene;
1,1-bis(methoxymethyl)-7-trimethyisilylindene;
1,1-bis(methoxymethyl)-7-trifluoromethylindene;
1,1-bis(methoxymethyl)-4,7-dimethyl-4,5,6,7-tetrahydroindene;
1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
1,1-bis(methoxymethyl)-1H-benz[e]indene;
1,1-bis(methoxymethyl)-1H-2-methylbenz[e]indene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene;

9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene.

As explained above, the catalyst component (a) comprises, in addition to the above electron donors, a titanium compound having at least a Ti-halogen bond and an Mg halide. The magnesium halide is preferably $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are $TiCl_4$ and $TiCl_3$; furthermore, also Ti-haloalcoholates of formula $Ti(OR)_{n-y}X_y$ can be used, where n is the valence of titanium, y is a number between 1 and n-1 X is halogen and R is a hydrocarbon radical having from 1 to 10 carbon atoms.

Preferably, the catalyst component (a) has an average particle size ranging from 20 to 70 μm and more preferably from 25 to 65 μm. As explained the succinate is present in an amount ranging from 50 to 90% by weight with respect to the total amount of donors. Preferably it ranges from 60 to 85%by weight and more preferably from 65 to 80%by weight. The 1,3-diether preferably constitutes the remaining amount.

The aluminum hydrocarbyl compound (b) is preferably an aluminum hydrocarbyl compound in which the hydrocarbyl is selected from $C_3$-$C_{10}$ branched aliphatic or aromatic radicals; preferably it is chosen among those in which the branched radical is an aliphatic one and more preferably from branched trialkyl aluminum compounds selected from triisopropylaluminum, tri-iso-butylaluminum, tri-iso-hexylaluminum, tri-iso-octylaluminum. It is also possible to use mixtures of branched trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds c) include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metil-dimethoxysilane. The external electron donor compound is used in such an amount to give a molar ratio between the organo-aluminum compound and said electron donor compound of from 5 to 500, preferably from 5 to 400 and more preferably from 10 to 200.

In step (i) the catalyst forming components are contacted with a liquid inert hydrocarbon solvent such as, e.g., propane, n-hexane or n-heptane, at a temperature below about 60°C and preferably from about 0 to 30°C for a time period of from about six seconds to 60 minutes.

The above catalyst components (a), (b) and optionally (c) are fed to a pre-contacting vessel, in amounts such that the weight ratio (b)/(a) is in the range of 0.1-10 and if the compound (c) is present, the weight ratio (b)/(c) is weight ratio corresponding to the molar ratio as defined above. Preferably, the said components are pre-contacted at a temperature of from 10 to 20°C for 1-30 minutes. The precontact vessel can be either a stirred tank or a loop reactor.

Preferably, the precontacted catalyst is then fed to the prepolymerization reactor where a prepolymerization step (i) takes place. The prepolymerization step is carried out in a first reactor selected from a loop reactor or a continuously stirred tank reactor. The prepolymerization can be carried out either in gas-phase or in liquid-phase. Preferably it is carried out in liquid-phase. The liquid medium comprises liquid alpha-olefin monomer(s), optionally with the addition of an inert hydrocarbon solvent. Said hydrocarbon solvent can be either aromatic, such as toluene, or aliphatic, such as propane, hexane, heptane, isobutane, cyclohexane and 2,2,4-trimethylpentane. The amount of hydrocarbon solvent, if any, is lower than 40% by weight with respect to the total amount of alpha-olefins, preferably lower than 20% by weight. Preferably, step (i)a is carried out in the absence of inert hydrocarbon solvents.

The average residence time in this reactor generally ranges from 2 to 40 minutes, preferably from 10 to 25 minutes. The temperature ranges between 10°C and 50°C, preferably between 20°C and 40°C. Adopting these conditions allows to obtain a pre-polymerization degree in the preferred range from 60 to 800g per gram of solid catalyst component,

preferably from 150 to 500 g per gram of solid catalyst component. Step (i)a is further characterized by a low concentration of solid in the slurry, typically in the range from 50 g to 300 g of solid per liter of slurry.

The slurry containing the catalyst preferably pre-polymerized is discharged from the pre-polymerization reactor and fed to the reactor where step (ii) takes place. Step (ii) can be carried out either in gas-phase or in liquid phase. The gas-phase process can be carried out in a fluidized or stirred, fixed bed reactor or in a gas-phase reactor comprising two interconnected polymerization zones one of which, working under fast fluidization conditions and the other in which the polymer flows under the action of gravity. The liquid phase process can be either in slurry, solution or bulk (liquid monomer). This latter technology is the most preferred and can be carried out in various types of reactors such as continuous stirred tank reactors, loop reactors or plug-flow ones. The polymerization is generally carried out at temperature of from 20 to 120°C, preferably of from 40 to 85°C. When the polymerization is carried out in gas-phase the operating pressure is generally between 0.5 and 10 MPa, preferably between 1 and 5 MPa. In the bulk polymerization the operating pressure is generally between 1 and 6 MPa preferably between 1.5 and 4 MPa.

Conventional additives, fillers and pigments, commonly used in olefin polymers, may be added, such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents are added to the compositions of the present invention in quantities ranging from 0.05 to 2% by weight, more preferably from 0.1 to 1% by weight, with respect to the total weight, for example.

The particulars are given in the following examples, which are given to illustrate, without limiting, the present invention.

EXAMPLES

The following analytical methods have been used to determine the properties reported in the detailed description and in the examples.

Xylene-soluble faction at 25°C

2.5 g of polymer and 250 rnL of o-xylene are introduced in a glass flask equipped with a refrigerator and a magnetical stirrer. The temperature is raised in 30 minutes up to the boiling pint of the solvent. The so obtained solution is then kept under reflux and stirring for further 30 minutes. The closed flask is then kept for 30 minutes in a bath of ice and water and in thermostatic water bath at 25°C for 30 minutes as well. The solid thus obtained is filtered on quick filtering paper and the filtered liquid is divided into two 100 ml aliquots. One 100 ml aliquots of the filtered liquid is poured in a previously weighed aluminum container, which is heated on a heating plate under nitrogen flow, to remove the solvent by evaporation. The container is then kept on an oven at 80°C under vacuum until constant weight is obtained. The residue is weighed to determine the percentage of xylene-soluble polymer.

**Ethylene (C2) content**

Ethylene content has been determined by IR spectroscopy.

The sample of a pressed film has been prepared according to ASTM D5576-00 (2013). The spectrum of a pressed film of the polymer is recorded in absorbance vs. wavenumbers ($cm^{-1}$). The following measurements are used to calculate C2 content:

a) **Area ($A_t$)** of the combination absorption bands between 4482 and 3950 $cm^{-1}$ which is used for spectrometric normalization of film thickness.

b) **Area ($A_{C2}$)** of the absorption band due to methylenic sequences ($CH_2$ rocking vibration) after a proper digital subtraction of an isotactic polypropylene (IPP) reference spectrum. The range 660 to 790 $cm^{-1}$ is used for both heterophasic and/or random copolymers.

**Molar ratio of feed gasses**

Determined by gas-chromatography

**Melt flow rate (MFR)**

Determined according to IS0 1133 (230°C, 2.16 Kg)

**Intrinsic viscosity**

Determined in tetrahydronaphthalene at 135°C

**Flexural modulus**

Determined according to IS0 178

**Stress at yield and at break**

Determined according to IS0 527

**Elongation at yield and break**

Determined according to IS0 527

**IZOD Impact Strength**

Determined according to IS0 18011A

**Melting temperature, melting enthalpy and crystallization temperature**

Determined by differential scanning calorimetry (DSC). weighting 6±1 mg, is heated to 220±1° C at a rate of 20 °C/min and kept at 220±1° C for 2 minutes in nitrogen stream and it is thereafter cooled at a rate of 20° C/min to 40±2°C, thereby kept at this temperature for 2 min to crystallise the sample. Then, the sample is again fused at a temperature rise rate of 20° C/min up to 220° C ±1. The melting scan is recorded, a thermogram is obtained, and, from this, melting temperatures and crystallization temperatures are read.

**Polydispersity Index (PI):** measurement of molecular weight distribution of the polymer. To determine the PI value, the modulus separation at low modulus value, e.g. 500 Pa, is determined at a temperature of 200 °C by using a RMS-800 parallel plates rheometer model marketed by Rheometrics (USA), operating at an oscillation frequency which increases from 0.01 rad/second to 100 rad/second. From the modulus separation value, the PI can be derived using the following equation:

$$PI = 54.6 \text{ x } (\text{modulus separation})^{-1.76}$$

wherein the modulus separation (MS) is defined as:

$$MS = (\text{frequency at } G' = 500 \text{ Pa})/(\text{frequency at } G'' = 500 \text{ Pa})$$

wherein G' is the storage modulus and G" is the loss modulus.

**Carbon emission**

Determined according VDA 277:1995

**Oligomer content**

The determination of oligomer content by solvent extraction consists of treating 5g of polypropylene sample with 10 ml of methylendichloride (CH2Cl2) into the vial. Oligomers from the sample are extracted by placing the vial into the ultrasonic bath at 25°C for 4 hours. 1 μl of the extracted solution is injected into capillary column and analysed by using flame ionization detection, without any filtration. For quantitative estimation of oligomer content a calibration based on external standard method has been applied. In particular a series of hydrocarbon (C12-C22-C28-C40) have been used.

**Gloss**

10 rectangular specimens (55x60x1 mm) for each polymer to be tested are obtained by injection molded using

a Battenfeld BA500CD operated under the following conditions:

| | |
|---|---|
| Screw speed: | 120 RPM |
| Back pressure: | 10 bar |
| Mould temperature: | 40°C |
| Melt temperature: | 260°C |
| Injection time: | 3 sec |
| First holding time: | 5 sec |
| Second holding time: | 5 sec |
| Cooling time (after second holding): | 10 sec |

The value of the injection pressure should be sufficient to completely fill the mould in the above mentioned indicated time span.

The glossmeter used is a photometer Zehntner model ZGM 1020 or 1022 set with an incident angle of 60°. The value reported corresponds to the mean gloss value over 10 specimens for each tested polymer. The measurement has bene carried out according to ASTM **D2457** - **13.** The apparatus calibration is done with a sample having a known gloss value.

**Samples for the mechanical analysis**

Samples have been obtained according to ISO 1873-2:2007 excepting for the flexural modulus for which ISO 3167 has been used.

**Preparation of the solid catalyst component of Examples 1 and 2**

Into a 2000 mL five-necked glass reactor, equipped with mechanical stirrer, jacket and a thermocouple, purged with nitrogen, 1000 mL of TiCl4 were introduced and the reactor cooled at -5°C. While stirring, 60.0 g of microspheroidal MgCl2·1.7C2H5OH having average particle size of 58μm (prepared in accordance with the method described in example 1 of EP728769) was added at -5°C. The temperature was raised at 40°C and an amount of diethyl 2,3-diisopropylsuccinate such as to have a Mg/succinate molar ratio of 13 was added. The temperature was raised to 100°C and kept at this value for 60 min. After that the stirring was stopped for 15 min and the solid settled down. The liquid was siphoned off. After siphoning, fresh TiCl4 and an amount of 9,9-bis(methoxymethyl)fluorene such to have a Mg/diether molar ratio of 26 was added. Then the temperature was raised to 110°C and kept for 30 minutes under stirring. The reactor was then cooled at 75°C and the stirrer was stopped for 15 min. After sedimentation and siphoning, fresh TiCl4 was added. Then the temperature was raised to 90°C and the suspension was stirred for 15min. The temperature was then decreased to 75°C and the stirrer was stopped, for 15 min. After sedimentation and siphoning at the solid was washed six times with anhydrous hexane (6 x 1000 ml) at 60 °C and one time with hexane at 25°C. The solid was dried in a rotavapor.

**Preparation of the solid catalyst component of comparative example 3**

An initial amount of microspheroidal $MgCl_2 \cdot 2.8C_2H_5OH$ was prepared according to the method described in ex.2 of WO98/44009 but operating on larger scale and setting the stirring conditions so as to obtain an adduct having an average particle size of 25 μm.

<u>Preparation of the solid catalyst component</u>

Into a 500 mL four-necked round flask, purged with nitrogen, 250 ml of TiCl4 are introduced at 0° C. While stirring, 10.0 g of microspheroidal $MgCl_2 \cdot 1.8C_2H_5OH$ (prepared according to the method described in ex.2 of USP 4,399,054 but operating at 3000 rpm instead of 10000 rpm) and 9.1 mmol of diethyl 2,3-(diisopropyl)succinate are added. The temperature is raised to 100°C and maintained for 120 min. Then, the stirring is discontinued, the solid product was allowed to settle and the supernatant liquid is siphoned off. Then the following operations are repeated twice: 250 ml of fresh TiCl4 are added, the mixture is reacted at 120°C for 60 min and the supernatant liquid is siphoned off. The solid is washed six times with anhydrous hexane (6×100 mL) at 60°C.

**Preparation of the catalyst system for examples 1, 2 and comparative example 3**

Before introducing it into the polymerization reactors, the solid catalyst component described above was contacted with aluminum-triethyl (TEAL) and dicyclopentyldimethoxysilane (DCPMS) at a temperature of 15°C.

Prepolymerization

The catalyst system was then subject to prepolymerization treatment at 20°C by maintaining it in suspension in liquid propylene for a residence time of 9 minutes before introducing it into the polymerization reactor.

Polymerization

The polymerisation run is conducted in continuous in a series of three reactors equipped with devices to transfer the product from one reactor to the one immediately next to it. The first reactor is a liquid phase reactor, and the second and third reactors are fluid bed gas phase reactors. Polymer (a) is prepared in the first reactor, while polymers (b) and (c) are prepared in the second and third reactor, respectively.

Temperature and pressure are maintained constant throughout the course of the reaction. Hydrogen is used as molecular weight regulator.

The gas phase (propylene, ethylene and hydrogen) is continuously analysed via gas-chromatography.

At the end of the run the powder is discharged and dried under a nitrogen flow. The polymerization conditions are reported in table 2.

The polyolefin composition of examples 1 and 2 and comparative example 3 have been extruded under nitrogen atmosphere in a twin screw extruder, at a rotation speed of 250 rpm and a melt temperature of 200-250 °C with the additives reported in table 1 and pelletized. The polymers features are reported in tables 3 and 4

Table 1

| Example | | 1 | 2 | Comp 3 |
|---|---|---|---|---|
| SONGNOX 1680(IRG.168) | wt% | 0.10 | 0.10 | 0.10 |
| Irganox 1010 | wt% | 0.05 | 0.05 | 0.05 |
| Calcium stearate | wt% | 0.05 | 0.05 | 0.05 |
| TALCO HM05 | wt% | 0.85 | 0.85 | 0.85 |

Table 2 - Polymerization

| **Example** | | **1** | **2** | **Comp 3** |
|---|---|---|---|---|
| TEAL/solid catalyst component weight ratio | | 13 | 14 | 7.5 |
| TEAL/DCPMS weight ratio | | 6 | 6 | 4 |
| **Liquid phase reactor** | | | | |
| Polymerisation temperature | °C | 70 | 70 | 70 |
| Pressure | Barg | 39.3 | 39.3 | 40 |
| Residence time | min | 80 | 77 | 23 |
| $H_2$ bulk | Mol ppm | 5900 | 6400 | 3900 |
| **1$^{st}$ gas phase reactor** | | | | |
| Polymerisation temperature | °C | 80 | 80 | 80 |
| Pressure | Barg | 15 | 16 | 15 |
| Residence time | min | 18 | 14 | 15 |
| $C_2^- / (C_2^- + C_3^-)$ | Mol ratio | 0.29 | 0.32 | 0.28 |
| $H_2 / C_2$ | Mol ratio | 0.042 | 0.036 | 0.051 |

(continued)

| **$2^{nd}$ gas phase reactor** | | | | |
|---|---|---|---|---|
| Polymerisation temperature | °C | 93 | 95 | 95 |
| Pressure | Barg | 16 | 17 | 15 |
| Residence time | min | 44 | 35 | 18 |
| $C_2^- / (C_2^- + C_3^-)$ | Mol ratio | 0.97 | 0.97 | 0.98 |
| $H_2 / C_2$ | Mol ratio | 0.35 | 0.35 | 0.2 |
| $H_2$ bulk = hydrogen concentration in the liquid monomer; $C_2^-$ = ethylene ; $C_3^-$ = propylene | | | | |

Table 3 - Composition Analysis

| **Example** | | **1** | **2** | **Comp 3** |
|---|---|---|---|---|
| **Component a)** | | | | |
| **propylene homopolymer** | | | | |
| Homopolymer content | %wt | 56.5 | 56 | 40 |
| MFR | g/10 min | 121.0 | 150.0 | 65.0 |
| Xylene soluble fraction | %wt | 1.9 | 2.1 | 2.5 |
| | | | | |
| **Component b)** | | | | |
| **Propylene-ethylene copolymer** | | | | |
| Copolymer content | %wt | 22.5 | 23 | 18 |
| Ethylene content | %wt | 43 | 46 | 40 |
| Xylene soluble fraction* | %wt | 26.5 | 26.7 | 21.5 |
| Intrinsic viscosity xylene soluble fraction* | dl/g | 3.38 | 3.58 | 3.00 |
| **Component c)** | | | | |
| **Polyethylene** | | | | |
| Polyethylene content | %wt | 21 | 21 | 22 |
| Ethylene content (by calculation) | %wt | 100 | 100 | 100 |
| *xylene soluble fraction of a) + b) | | | | |

**Table 4 Properties of the composition**

| Example | | 1 | 2 | Comp 3 |
|---|---|---|---|---|
| MFR | g/10' | 17.6 | 16.7 | 14.0 |
| Flexural Modulus | MPa | 1130 | 1063 | 1110 |
| Izod at 23 °C | $kJ/m^2$ | 14,0 | 17,9 | 34,6 |
| Izod at 0 °C | $kJ/m^2$ | 11,3 | 13,3 | 10,2 |
| Izod at -20 °C | $kJ/m^2$ | 8,2 | 10,2 | 9,1 |
| Izod at -30 °C | $kJ/m^2$ | 7,8 | 9,2 | - |
| Tens. Str. @ yield | MPa | 19,8 | 18,3 | 20,9 |
| Elong. @ yield | % | 4,7 | 4,5 | 6,4 |

(continued)

| Example | | 1 | 2 | Comp 3 |
|---|---|---|---|---|
| Tens. Str. @ break | MPa | 16,3 | 15,3 | 14,7 |
| Elong.@ break | % | 8,1 | 9,0 | 21,0 |
| D/B TT | °C | < -50 | < -50 | < -50 |
| GLOSS 60' | | 18 | 15 | 24 |
| Shrinkage (Long/Tras) | % | 1.26 / 1.33 | 1.28 / 1.35 | - |
| VOC (Sercovam FR lab) | ppm | 174 | 209 | - |
| C-emission VDA277 | mgC/g | 14,1 | 15,9 | 55,0 |
| Oligomers | ppm | 2000 | 2060 | 4585 |
| MFRa/MFRt | | 6.9 | 9.0 | 4.6 |

## Claims

1. A polyolefin composition comprising:

   a) from 40.0wt% to 58.5wt%, of a propylene homopolymer having the fraction insoluble in xylene at 25°C higher than 96 wt% and an melt flow rate ($MFR^a$ ISO method 1133 (230° C and 2.16 kg)) ranging from 95.0 to 200.0 g/10 min;
   b) from 21.0 wt% to 30.0 wt%%, of a copolymer of ethylene and propylene, the copolymer having an amount of recurring units deriving from ethylene ranging from 35.0 wt% to 60.0 wt%, and the polymer fraction soluble in xylene at 25°C of component a) + component b) having an intrinsic viscosity value ranging from 3.1 to 4.2 dl/g; and ,
   c) from 20.5 wt% to 30.0wt%%, of ethylene homopolymer;

   said composition having a value of melt flow rate ($MFR^T$ ISO method 1133 (230° C and 2.16 kg)) ranging from 9.0 to 30.0 g/10 min, and the ratio between the MFR of component a) $MFR^a$ and the MFR of the total composition $MFR^T$ $MFR^a/MFR^T$ is comprised between 5.0 and 15.0.

2. The polyolefin composition according to claim 1 wherein component a) ranges from 45.0wt% to 58.0wt%, component b) ranges from 21.5 wt% to 27.5%, and component c) ranges from 20.5 wt% to 27.5%,.

3. The polyolefin composition according to claims 1 or 2 wherein in component b) the amount of recurring units deriving from ethylene ranges from 38.0 wt% to 55.0 wt%.

4. The polyolefin composition according to anyone of claims 1-3 wherein the ratio between the MFR of component a) $MFR^a$ and the MFR of the total composition $MFR^T$ $MFR^a/MFR^T$ is comprised between 6.0 and 10.0;

5. The polyolefin composition according to anyone of claims 1-4 wherein the flexural modulus value is comprised between 800 and 1400 MPa

6. The polyolefin composition according to anyone of claims 1-5 wherein the gloss of the composition is lower than 22 %.

7. The polyolefin composition according to anyone of claims 1-6 wherein the values of carbon emission, measured according to VDA 227 (C-emission), are lower than 25.0 μgC/g

## Patentansprüche

1. Eine Polyolefinzusammensetzung, die Folgendes beinhaltet:

   a) zu 40,0 Gew.-% bis 58,5 Gew.-% ein Propylenhomopolymer mit einer bei 25 °C nicht in Xylol löslichen

Fraktion von mehr als 96 Gew.-% und einer Schmelzfließrate ($MFR^a$, ISO-Verfahren 1133 (bei 230 °C und 2,16 kg)) im Bereich von 95,0 bis 200,0 g/10 min;
b) zu 21,0 Gew.-% bis 30,0 Gew.-% ein Copolymer aus Ethylen und Propylen, wobei das Copolymer eine Menge an von Ethylen abgeleiteten Wiederholungseinheiten im Bereich von 35,0 Gew.-% bis 60,0 Gew.-% aufweist und die bei 25 °C in Xylol lösliche Polymerfraktion von Komponente a) + Komponente b) einen intrinsischen Viskositätswert im Bereich von 3,1 bis 4,2 dl/g aufweist; und
c) zu 20,5 Gew.-% bis 30,0 Gew.-% ein Ethylenhomopolymer;

wobei die Zusammensetzung einen Wert der Schmelzfließrate ($MFR^T$, ISO-Verfahren 1133 (bei 230 °C und 2,16 kg)) im Bereich von 9,0 bis 30,0 g/10 min aufweist und das Verhältnis zwischen der MFR von Komponente a) $MFR^a$ und der MFR der gesamten Zusammensetzung $MFR^T$ $MFR^a/MFR^T$ zwischen 5,0 und 15,0 liegt.

**2.** Polyolefinzusammensetzung gemäß Anspruch 1, wobei Komponente a) im Bereich von 45,0 Gew.-% bis 58,0 Gew.-% liegt, Komponente b) im Bereich von 21,5 Gew.-% bis 27,5% liegt und Komponente c) im Bereich von 20,5 Gew.-% bis 27,5% liegt.

**3.** Polyolefinzusammensetzung gemäß Ansprüchen 1 oder 2, wobei in Komponente b) die Menge an von Ethylen abgeleiteten Wiederholungseinheiten im Bereich von 38,0 Gew.-% bis 55,0 Gew.-% liegt.

**4.** Polyolefinzusammensetzung gemäß einem der Ansprüche 1-3, wobei das Verhältnis zwischen der MFR von Komponente a) $MFR^a$ und der MFR der gesamten Zusammensetzung $MFR^T$ $MFR^a/MFR^T$ zwischen 6,0 und 10,0 liegt;

**5.** Polyolefinzusammensetzung gemäß einem der Ansprüche 1-4, wobei der Elastizitätsmodulwert zwischen 800 und 1400 MPa liegt.

**6.** Polyolefinzusammensetzung gemäß einem der Ansprüche 1-5, wobei der Glanz der Zusammensetzung weniger als 22 % beträgt.

**7.** Polyolefinzusammensetzung gemäß einem der Ansprüche 1-6, wobei die Kohlenstoffemissionswerte, gemessen gemäß VDA 227 (C-Emission), weniger als 25,0 $\mu$g C/g betragen.

**Revendications**

**1.** Composition de polyoléfine comprenant :

a) de 40,0 % en poids à 58,5 % en poids, d'un homopolymère de propylène ayant la fraction insoluble dans le xylène à 25° C supérieure à 96 % en poids et un indice de fluidité à chaud ($MFR^a$ ISO 1133 (230°C et 2,16 kg)) dans une plage allant de 95,0 à 200,0 g /10 min ;
b) de 21,0 % en poids à 30,0 % en poids d'un copolymère d'éthylène et de propylène, le copolymère ayant une quantité d'unités récurrentes dérivées de l'éthylène dans une plage allant de 35,0 % en poids à 60,0 % en poids, et la fraction polymère soluble dans le xylène à 25° C du composant a) + composant b) ayant une valeur de viscosité intrinsèque dans une plage allant de 3,1 à 4,2 dl /g ; et
c) de 20,5 % en poids à 30 % en poids d'homopolymère d'éthylène ;

ladite composition présentant une valeur de l'indice de fluidité à chaud ($MFR^T$ ISO 1133 (230° C et 2,16 kg)) dans une plage allant de 9,0 à 30,0 g /10 min, et le rapport entre l'indice de fluidité à chaud (MFR) du composant a) $MFR^a$ et le MFR de la composition totale $MFR^T$ $MFR^a/MFR^T$ est compris entre 5,0 et 15,0.

**2.** Composition de polyoléfine selon la revendication 1, dans laquelle le composant a) est situé dans une plage allant de 45 % en poids à 58 % en poids, le composant b) est situé dans une plage allant de 21,5 % en poids à 27,5 %, et le composant c) est situé dans une plage allant de 20,5 % en poids à 27,5 %.

**3.** Composition de polyoléfine selon les revendications 1 ou 2, dans laquelle dans le composant b) la quantité d'unités récurrentes dérivées de l'éthylène est située dans une plage allant de 38,0 % en poids à 55,0 % en poids.

**4.** Composition de polyoléfine selon l'une quelconque des revendications 1 à 3, dans laquelle le rapport entre le MFR du composant a) $MFR^a$ et le MFR de la composition totale $MFR^T$ $MFR^a/MFR^T$ est compris entre 6,0 et 10,0 ;

**5.** Composition de polyoléfine selon l'une quelconque des revendications 1 à 4, dans laquelle la valeur de module de flexion est comprise entre 800 et 1400 MPa.

**6.** Composition de polyoléfine selon l'une quelconque des revendications 1 à 5, dans laquelle le brillant de la composition est inférieur à 22 %.

**7.** Composition de polyoléfine selon l'une quelconque des revendications 1 à 6, dans laquelle les valeurs d'émission de carbone, mesurées selon VDA 227 (C-émission), sont inférieures à 25,0 μgC /g.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006125720 A
- WO 2006067023 A
- US 4298718 A
- US 4495338 A
- EP 728769 A
- WO 9844009 A
- US 4399054 A